Europäisches Patentamt

European Patent Office

Office européen des brevets

(11) Veröffentlichungsnummer: **0 237 758**
**B1**

# EUROPÄISCHE PATENTSCHRIFT

(45) Veröffentlichungstag der Patentschrift:
**11.04.90**

(21) Anmeldenummer: **87101678.8**

(22) Anmeldetag: **06.02.87**

(51) Int. Cl.⁴: **F16J 15/24**, F16J 15/54, F16J 15/18, F16L 5/02

(54) **Dichtung.**

(30) Priorität: **21.03.86 DE 3609620**

(43) Veröffentlichungstag der Anmeldung:
**23.09.87 Patentblatt 87/39**

(45) Bekanntmachung des Hinweises auf die Patenterteilung:
**11.04.90 Patentblatt 90/15**

(84) Benannte Vertragsstaaten:
**AT BE CH DE ES FR GB IT LI NL SE**

(56) Entgegenhaltungen:
**DE-U- 8 436 214**
**US-A- 3 652 110**

(73) Patentinhaber: **Agintec AG, Limmattalstrasse 395, CH-8049 Zürich(CH)**

(72) Erfinder: **Maier, Hans Paul, Wilhelmstrasse 354, D-7730 Villingen-Schwenningen(DE)**
Erfinder: **Vlaykowski, Nikolay, In der Muslen 1/1, D-7730 Villingen-Schwenningen(DE)**

(74) Vertreter: **Gramm, Werner, Prof. Dipl.-Ing. et al, Patentanwälte Gramm + Lins Theodor-Heuss-Strasse 2, D-3300 Braunschweig(DE)**

## Beschreibung

Die Erfindung betrifft eine Dichtung, bestehend aus einem auf eine zylindrische Mantelfläche aufzuschiebenden und sich auf dieser mit einer radial wirkenden Dichtfläche abstützenden Elastomer-Formring mit einem Innenring, aus einem ebenfalls auf die genannte Mantelfläche aufzuschiebenden Kammerteil mit einer den Formring umschließenden, dessen Außenkontur gegenüber ein Untermaß aufweisenden Dichtungskammer, die sich ausgehend vom lichten Innendurchmesser des Kammerteils konisch zu einer Stirnseite des Kammerteils erweitert, und aus Befestigungsmitteln, die das Kammerteil gegenüber einem zweiten Bauteil festlegen, wobei der Formring eine vorzugsweise rechtwinklig zur radial wirkenden Dichtfläche liegende axial wirkende Dichtfläche aufweist zur Anlage an dem genannten zweiten Bauteil.

Eine derartige Ausführungsform läßt sich der US-A 3 652 110 entnehmen. Kammerteil und Elastomer-Formring sind hier auch in ausgebautem Zustand fest miteinander verbunden. Hierfür weist das Kammerteil einen in seine Dichtungskammer ragenden Ringsteg auf, der in eine entsprechend angepaßte Ringnut im Elastomer-Formring verriegelnd eingreift. Der Elastomer-Formring überragt mit seiner axial wirkenden Dichtfläche die Stirnseite des zugeordneten Kammerteils und übergreift mit einer sich radial nach innen erstreckenden Lippe die Stirnseite der zylindrischen Mantelfläche.

Dieses Dichtungssystem ist zur Verbindung zweier Rohre bestimmt, wobei auf die beiden Rohrenden ein jeweils gleich ausgebildetes Dichtungssystem aufgeschoben ist. Als Befestigungsmittel sind axiale Spannschrauben vorgesehen, die bei einer Rohrverbindung die beiden Kammerteile axial gegeneinander ziehen, bis die axial wirkenden Dichtflächen der beiden Elastomer-Forminge aneinander anliegen. Aufgrund der vorstehend beschriebenen Ausbildung der Elastomer-Formringe weisen dann die beiden Kammerteile sowie die beiden Rohrenden jeweils einen lichten Abstand voneinander auf. Der aus Metall bestehende Innenring ist im Querschnitt angenähert T-förmig ausgebildet, ragt mit seinem T-Fuß in den Elastomer-Formring hinein und liegt mit seinem T-Balken außen gegen die axial wirkende Dichtfläche des Elastomer-Formringes an, ragt also über diese in axialer Richtung hinaus. In Arbeitsstellung der fertig montierten Rohrverbindung liegen dann die beiden Innenringe mit ihrem T-Balken aneinander an.

Eine andere Ausführungsform läßt sich dem deutschen Gebrauchsmuster 84 36 214 entnehmen. Hier ist eine Rohrverbindung zwischen zwei stumpf miteinander zu verbindenden Rohrenden offenbart, auf die jeweils ein Flansch, ein Klemmelement und ein Kammerteil lose aufgeschoben sind, die durch eine Verschraubung gegeneinander verspannbar sind. Eine Dichtung in Form eines Elastomer-Formringes mit einem eingebetteten Innenring umschließt den Verbindungsstoß und ragt mit ihren beiden axialen Enden jeweils in eine Dichtungskammer der beiden Kammerteile. Flansch und Kammerteil bilden zwischen sich jeweils eine Klemmkammer, in die das genannte Klemmelement eintaucht, das sich mit einem radial innenliegenden Klemmrand auf dem Rohrende abstützt, hinsichtlich eines radial außenliegenden Klemmrandes von einer Klemmfläche der Klemmkammer übergriffen wird und in axialer Richtung so aus der Klemmkammer herausragt, daß eine das Klemmelement beaufschlagende axiale Druckkraft zu einer Vergrößerung des Außendurchmessers und zu einer Verkleinerung des Innendurchmessers des Klemmelementes führt. Die äußere Mantelfläche des Elastomer-Formringes ist angenähert halbkreisförmig ausgebildet, wobei die beiden äußeren, sich auf der Mantelfläche der beiden Rohrenden abstützenden Ringkanten des Formringes mit einem Radius versehen sind. Dieser Radius ist größer als die Summe der Plus- und Minustoleranzen der Rohrdurchmesser zuzüglich dem montagebedingten Spalt zwischen dem Innendurchmesser der Kammerteile und der größten Toleranz der Rohrdurchmesser. In den Elastomer-Formring ist ein Innenring aus hartem und/oder plastischem Werkstoff eingebettet. Die Außenkontur des Formringes entspricht etwa der der beiden Dichtungskammern in den Kammerteilen, weist jedoch ein Übermaß auf, so daß ein Gegeneinanderdrücken der beiden Kammerteile die Dichtung verformt und mit einem Druck beaufschlagt, der axial und radial nach innen gerichtet ist. Der Innenring stützt sich – ebenso wie der Elastomer-Formring – auf den Mantelflächen der beiden Rohrenden ab.

Mit dieser vorbekannten Dichtung werden komplette Rohrverbindungen oder andere Bauteile in vorteilhafter Weise abgedichtet, sofern Rohre oder rohrähnliche Bauteile zur Abstützung der beiden beidseitig des Innenringes liegenden, radial wirkenden Dichtflächen Verwendung finden. Nicht geeignet ist dieses vorbekannte System jedoch für den Übergang von Flanschen auf Flachdichtungsbasis zu einer Rohrverbindung gemäß der vorstehend beschriebenen Bauart. Denn hier ergeben sich außerhalb des Rohrmantels Dichtflächen, die senkrecht zur Rohrachse stehen.

Der Erfindung liegt die Aufgabe zugrunde, die eingangs erläuterte Dichtung so abzuwandeln, daß sie sich in einem erweiterten Einsatzbereich verwenden läßt.

Diese Aufgabe wird erfindungsgemäß durch folgende Merkmale gelöst:

a) Das zweite Bauteil liegt bei angezogenen Befestigungsmitteln an der genannten Stirnseite des Kammerteils an;

b) der Innenring ist in den Elastomer-Formring eingebettet;

c) der kleinste lichte Innendurchmesser des Innenringes ist größer als der Durchmesser der radial wirkenden Dichtfläche;

d) der Formring bildet zwischen der sichtbaren, seiner gewölbten Mantelfläche gegenüberliegenden inneren Mantelfläche des Innenringes und seinen beiden Dichtflächen eine schmale ringförmige Radial- und Axialfläche.

Erfindungsgemäß ist also der Innenring in den Elastomer-Formring so eingebettet, daß zwischen den abzudichtenden Flächen und dem Innenring jeweils ein lichter Abstand besteht; der Innenring wirkt innerhalb des Formringes lediglich als Stützring. Im Bereich beider Dichtflächen übernimmt der Formring die Funktion der Primär-Dichtung.

Dabei ist es vorteilhaft, wenn die äußere, die beiden Dichtflächen des Formringes miteinander verbindende Mantelfläche angenähert ein Viertelkreissegment bildet.

In einer speziellen Ausführungsform kann der lichte Innendurchmesser der axial wirkenden kreisringförmigen Dichtfläche größer sein als der Durchmesser der radial wirkenden Dichtfläche.

Die Abdichtwirkung wird durch Anziehen der genannten Befestigungsmittel erzielt, wobei diese Befestigungsmittel Schrauben sein können, mit denen das Kammerteil direkt mit der zylindrischen Mantelfläche (Rohr, Welle, Achse) und/oder mit dem genannten zweiten Bauteil (Flansch, Gehäusewandung) verschraubt wird. Die Dichtung eignet sich zum Abdichten statisch eingesetzter Rohre, rotierender Wellen und/oder axial beweglicher Schubstangen u.dgl. gegenüber Gehäusewandungen, sofern die Bewegungsfrequenz innerhalb der zugelassenen Reibwerte des Formring-Werkstoffes liegen. Der Formring besteht aus einem verhältnismäßig weichen Elastomer.

Der Innenring besteht aus einem härteren Werkstoff, ggf. aus Metall und ist lose in eine angepaßte Ringnut des Formringes eingesetzt. Ein zwischen dem zweiten Bauteil und der zylindrischen Mantelfläche hindurchtretendes Druckmedium würde dadurch zu einer Vergrößerung der Anpressung der beiden genannten Dichtflächen des Formringes führen.

Dichtungen, die zum Abdichten von rotierenden Wellen eingesetzt werden, wie beispielsweise für Pumpen, Kompressoren o.dgl. sind heute noch überwiegend Packungen aus plastischen Werkstoffen, die sehr groß und lang bauen. Zur Aufbringung der Anpreßkräfte werden einstellbare Distanz- und/oder Zwischenringe benötigt, die zur Arretierung auf Gewinde montiert werden, die sich zum Teil auf den Wellen, zum Teil in den Gehäusen befinden. Derartige Packungen ertragen Relativbewegungen der Wellen zu den Gehäusen überhaupt nicht oder aber nur sehr schlecht und zwar insbesondere dann, wenn durch Zahneingriffe von Getrieberädern axiale Wellen-Belastungen, Verwindungen oder Tangential-Belastungen ergeben. Im Maschinenbau sowie bei Anwendern von Arbeitsmaschinen für flüssige oder gasförmige Medien ist es bekannt, daß Wellenabdichtungen auf der Basis von Packungen nicht nur aufgrund derartiger mechanischer Einflüsse, sondern auch als Folge von Temperatur-Differenzen, Druckpulsationen u.dergl. während ihrer Lebensdauer immer wieder nachgestellt werden müssen, um inzwischen eingetretene Leckagen zu beheben. Beim Einsatz von Wellendichtungen, die als Dichtungspaket mit Stützring und zwischengelagerten Elastomer-Ringen aufgebaut sind, gilt eine winklige Kombinations-Abdichtung axial zu radial als problematisch und wird daher von Dichtungs-Herstellern nicht empfohlen. Sowohl für Packungen wie für Dichtungskombinationen mit Elastomer-Ringen bestehen überwiegend Einbauvorschriften für den Radialbereich. Die Dichtungen bzw. Dichtungskombinationen dichten maßlich exakt vorgegebene Bohrungen durch Gehäuse zu den durchgeführten Wellen ab. Das Dichtungspaket befindet sich dabei zwischen Gehäuse-Bohrung und durchgeführter Welle.

Demgegenüber lassen sich mit der erfindungsgemäßen Dichtung Wellenabdichtungen wesentlich einfacher und für die Wellendurchführung mit geringerem Bauaufwand erzielen. Im Gehäusebereich können die möglichen Toleranzen größer gewählt werden; liegt der erfindungsgemäße Formring fest an dem zugeordneten Gehäuse an, können auch relativ große Rauhtiefen bzw. entsprechend geringe Bearbeitungsqualitäten gewählt werden.

Bei Arbeitsmaschinen, bei denen die Wellenlagerung, z.B. ein Wälzlager, abgedichtet sein muß, läßt sich die erfindungsgemäße Dichtung beidseitig der Gehäusewandung einsetzen, so daß das Lager, das in der Gehäusebohrung die Welle aufnimmt, beidseitig abgedichtet ist. Derartige Lagerabdichtungen sind besonders wichtig für z.B. trockenlaufende Kompressoren oder Pumpen, bei denen das Fördermedium strikt von der Lagerung zu trennen ist. Bei derartigen Anordnungen ist es unerheblich, ob eine oder beide der Dichtungen Unter- oder Oberdrück ausgesetzt ist bzw. sind.

Die Bauabmessungen sind bei der erfindungsgemäßen Dichtung deutlich geringer als bei den bekannten Packungen. Montage und Demon@ tage der erfindungsgemäßen Dichtungen sind einfacher; die Dichtungsfunktion ist insbesondere im Vergleich zum plastischen Dichtungsmaterial bei Packungen universeller und zwar sowohl im Druckwie im Unterdruckbereich.

Beträgt der Konuswinkel der Dichtungskammer des erfindungsgemäßen Kammerteils - bezogen auf die Symmetrieachse der Dichtungskammer - 45°, so ergeben sich auf die beiden Dichtflächen des Formringes in radialer sowie in axialer Richtung angenähert gleiche Druckkräfte. Durch Verkleinerung dieses Konuswinkels auf z.B. 40° läßt sich die radial wirkende Abdichtung verstärken, während eine Vergrößerung des Konuswinkels auf z.B. 50° zu einer Verstärkung der axial wirkenden Abdichtung führt. Durch Änderung des Konuswinkel läßt sich die Anpreßkraft-Differenz in Abhängigkeit der geänderten Gradzahlen für den Konuswinkel sowie in Abhängigkeit der Härten des Formringes einstellen, wobei die Auswirkungen der Toleranzen der Bauteile zu berücksichtigen sind.

Insbesondere dann, wenn Wellen mit hohen Gleitgeschwindigkeiten abzudichten sind, ist es vorteilhaft, wenn der Innenring mit einem dünnwandigen Formteil die radial wirkende und/oder axial wirkende Dichtfläche des Formringes ganz oder teilweise übergreift. Dabei ist es vorteilhaft, wenn zumindest die genannten Formteile des Innenringes aus unter Einwirkung von Reibungskräften fließenden Materialien bestehen z.B. PTFE oder PTFE mit Kohlenstoff-Faser-Füllstoffen, Weichmetall-Legierungen o.dergl. Die dünnwandigen Formteile des Innenringes können auch Rückfederungseigenschaften aufweisen. Bei allen diesen Ausführungsformen übernimmt der Innenring mit seinen Formteilen die Funktion der Primär-Dichtung, während der Elastomer-Formring nur als Sekundär-Dichtung dient. Die aufgezeigten Alternativlösungen geben aber auch die Möglichkeit, den Formring z.B. gegenüber der zylindrischen Mantelfläche (Welle, Rohr,Achse) als Primär-Dichtung einzusetzen, wobei dann der Innenring mit seinem genannten Formteil lediglich die axial wirkende Dichtfläche des Formringes abdecken würde. Es ist auch eine umgekehrte Lösung denkbar, bei der der Formring ausschließlich hinsichtlich seiner axial wirkenden Dichtfläche als Primär-Dichtung eingesetzt wird. Werden die genannten Formteile des Innenringes in die beiden Dichtflächen des Formringes eingebettet, ohne die beiden Dichtflächen vollständig abzudecken, wirkt auch der Formring in den beiden Dichtflächen mit schmalen Ringbereichen als Primär-Dichtung.

Es ist vorteilhaft, wenn der Innenring lose in eine angepaßte Ringnut des Formringes eingedrückt ist. Dabei liegt die den Innenring aufnehmende Ringnut mit ihrer offenen Seite zweckmäßig der Mantelfläche des Formringes gegenüber. Der Boden der den Innenring aufnehmenden Ringnut ist vorzugsweise nach außen angenähert parallel zur Mantelfläche des Formringes ausgewölbt.

Bei den Ausführungsformen, bei denen der Formring die Funktion der Primär-Dichtung übernimmt, ergibt sich zwischen dem Innenring und dem Formring eine Druckbeaufschlagung. Bei den für den dynamischen Einsatz konzipierten Ausführungsformen, bei denen der Innenring als Primär-Dichtung fungiert, kommt es nicht auf eine zusätzliche Unterstützung des Mediumsdrucks auf die Dichtungskombination an.

Weitere Merkmale der Erfindung sind Gegenstand der Unteransprüche und werden mit weiteren Vorteilen der Erfindung anhand von Ausführungsbeispielen näher erläutert.

In der Zeichnung sind einige als Beispiele dienende Ausführungsformen der Erfindung dargestellt. Es zeigen:

Figur 1 einen Formring mit eingebettetem Innenring in Draufsicht sowie im Querschnitt;
Figur 2 ein mit einer Buchse versehenes Kammerteil in Draufsicht sowie im Querschnitt;
Figur 3 ein mit einem Flansch versehenes Kammerteil in Draufsicht sowie im Querschnitt;
Figur 4 im Querschnitt eine montierte Dichtung mit einem Kammerteil gemäß Figur 3 und einem Formring und Innenring gemäß Figur 1;
Figuren 5 bis 8 jeweils in einer Darstellung gemäß Figur 1 einen Formring mit einem jeweils abgewandelten Innenring.

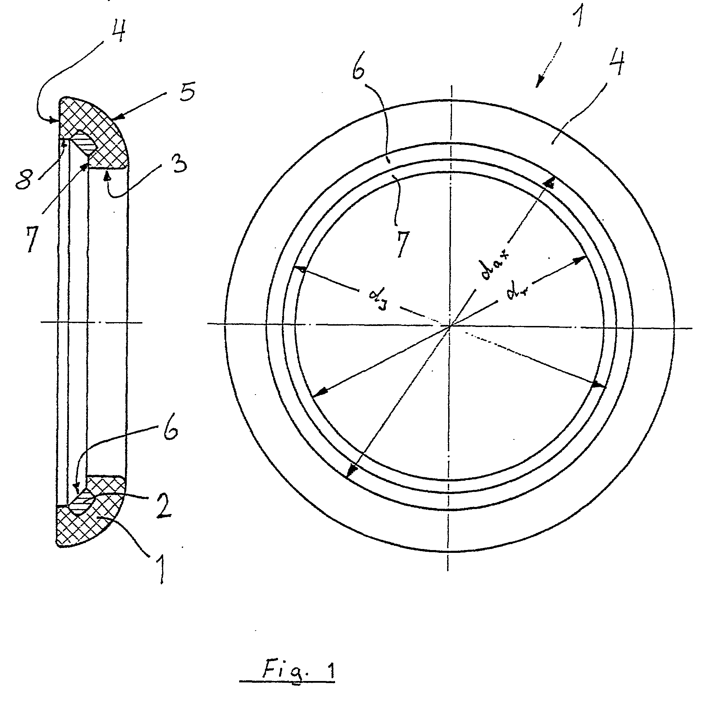

Figure 1 zeigt einen Elastomer-Formring 1 mit einem eingebetteten Innenring 2. Der Formring 1 weist eine radial wirkende Dichtfläche 3 sowie eine hierzu rechtwinklig angeordnete axial wirkende Dichtfläche 4 auf. Die äußere, die beiden Dichtflächen 3,4 miteinander verbindende Mantelfläche 5 des Formringes 1 bildet angenähert ein Viertelkreissegment.

Der lichte Innendurchmesser $d_{ax}$ der axial wirkenden kreisringförmigen Dichtfläche 4 ist größer als der Durchmesser $d_r$ der radial wirkenden Dichtfläche 3. Der kleinste lichte Innendurchmesser $d_I$ des Innenringes 2 ist größer als der Durchmesser $d_r$ der radial wirkenden Dichtfläche 3. Der Formring 1 bildet zwischen der sichtbaren, seiner gewölbten Mantelfläche 5 gegenüberliegenden inneren Mantelfläche 6 des Innenringes 2 und seinen beiden Dichtflächen 3,4 eine schmale ringförmige Radial- und Axialfläche 7, 8.

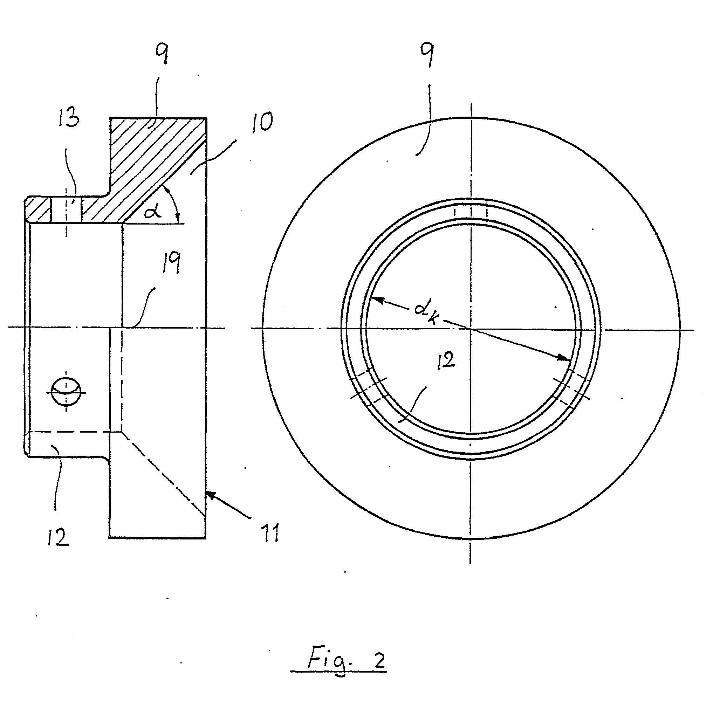

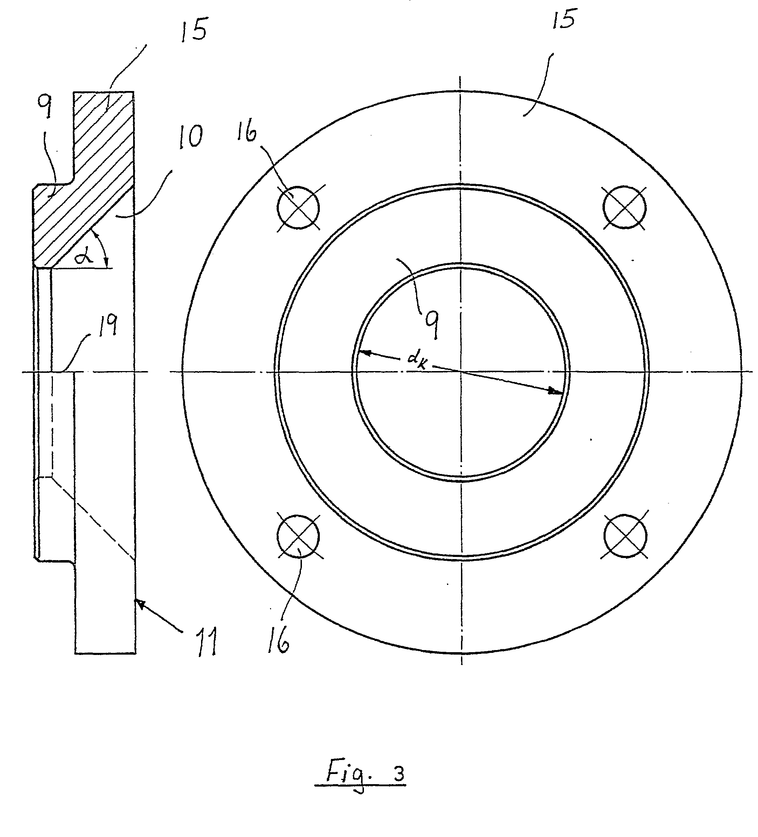

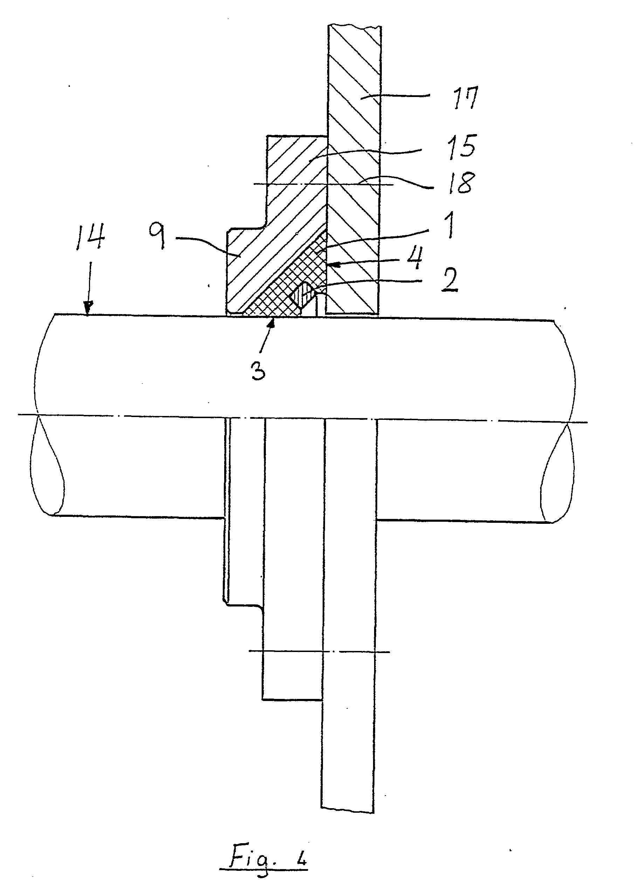

Die Figuren 2 und 3 zeigen jeweils ein Kammerteil 9 mit einer Dichtungskammer 10, die sich ausgehend vom lichten Innendurchmesser $d_K$ des Kammerteiles 9 konisch zu einer Stirnseite 11 des Kammerteils erweitert. Bei der Ausführungsform gemäß Figur 2 weist das Kammerteil 9 auf der der Dichtungskammer 10 abgewandten Seite eine Buchse 12 auf mit radial verlaufenden Ausnehmungen 13 für nicht dargestellte Befestigungsmittel gegenüber einer zylindrischen Mantelfläche 14 (siehe Figur 4), die ein Rohr, eine Welle oder Achse sein kann.

Bei der Ausführungsform gemäß Figur 3 trägt das Kammerteil 9 auf seiner die größte Öffnung der Dichtungskammer 10 aufweisenden Stirnseite 11 einen Flansch 15 mit axial verlaufenden Ausnehmungen 16 für nicht dargestellte Befestigungsmittel gegenüber einem zweiten Bauteil 17 (siehe Figur 4).

Figur 4 zeigt eine montierte Dichtung bestehend aus dem Formring 1 mit eingebettetem Innenring 2 gemäß Figur 1 und dem Kammerteil 9 gemäß Figur 3. Formring 1 und Kammerteil 9 sind auf eine die genannte zylindrische Mantelfläche 14 bildende Welle geschoben, wobei sich der Formring 1 mit seiner radial wirkenden Dichtfläche 3 auf dieser Welle abstützt. Der Formring 1 taucht vollständig in die Dichtungskammer 10 des Kammerteils 9 ein und stützt sich mit seiner axial wirkenden Dichtfläche 4 gegen das zweite Bauteil 17 ab, das z.B. ein Flansch eines Gehäuses sein kann. Die Innenkontur der Dichtungskammer 10 weist gegenüber der Außenkontur des Formringes 1 Untermaß auf, so daß beim Anziehen der in Figur 4 nur strichpunktiert dargestellten Befestigungsmittel 18 zwischen Kammerteil 9 und zweitem Bauteil17 der Formring 1 so weit verformt wird, daß er an der konischen Wandung der Dichtungskammer 10 flächig unter Spannung anliegt. Durch die Konizität der Dichtungskammer 10 wird beim Anziehen der Befestigungsmittel 18 auf den Formring 1 eine in radialer Richtung sowie eine in axialer Richtung wirkende Kraft ausgeübt. Diese Kraftkomponenten sind dann annähernd gleichgroß, wenn der Konuswinkel $\alpha$ der Dichtungskammer 10 - bezogen auf die Symmetrieachse 19 des Kammerteils 9 - 45° beträgt. Bei einem Winkel $\alpha < 45°$ erfolgt eine Verstärkung der radial wirkenden Abdichtung, während ein Konuswinkel > 45° zu einer Verstärkung der axial wirkenden Abdichtung führt.

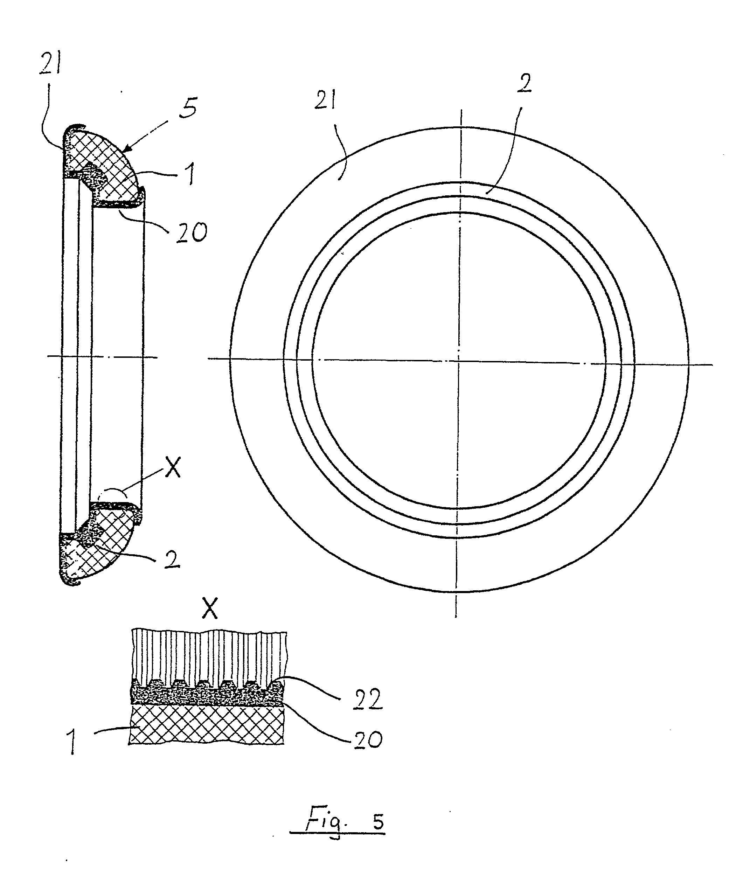

Bei der Ausführungsform gemäß Figur1 bzw. Figur 4 fungiert der Elastomer-Formring 1 als Primär-Dichtung. Der Innenring 2 wirkt als Stützring, ohne dabei in Berührung mit den abzudichtenden Flächen zu gelangen. Für bestimmte Anwendungsbereiche erscheinen Ausführungsformen zweckmäßig, bei denen der Innenring 2 die Funktion der Primär-Dichtung übernimmt, während der Formring 1 eine Sekundär-Dichtung darstellt. So zeigt Figur 5 einen Innenring 2, der mit je einem dünnwandigen Formteil 20,21 die radial wirkende Dichtfläche 3 sowie die axial wirkende Dichtfläche 4 des Formringes 1 vollständig übergreift. Die Formteile 20,21 sind dabei noch etwas in den Bereich der gewölbten Mantelfläche 5 des Formringes 1 eingezogen und bilden dadurch eine Abstützung für den Elastomer-Formring 1 und verhindern, daß der Formring mit seinen Dichtflächen 3,4 unmittelbar in Berührung kommt mit den abzudichtenden Flächen. Die Detaildarstellung X in vergrößertem Maßstab läßt erkennen, daß die genannten Formteile 20,21 des Innenringes 2 eine profilierte Dichtfläche 22 aufweisen. Zumindest die Formteile 20,21 bestehen vorzugsweise aus unter Einwirkung von Reibungskräften fließenden Materialien.

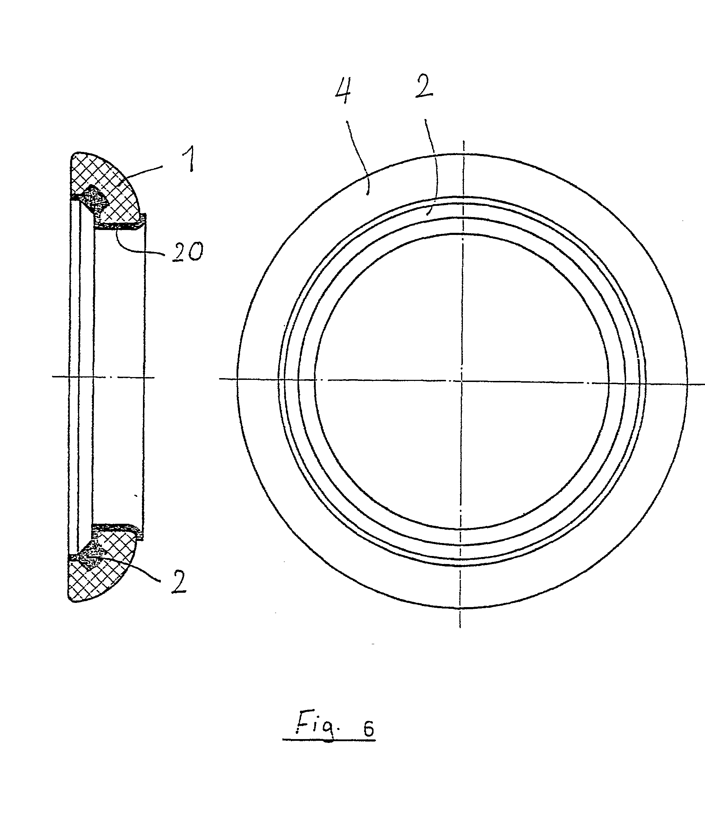

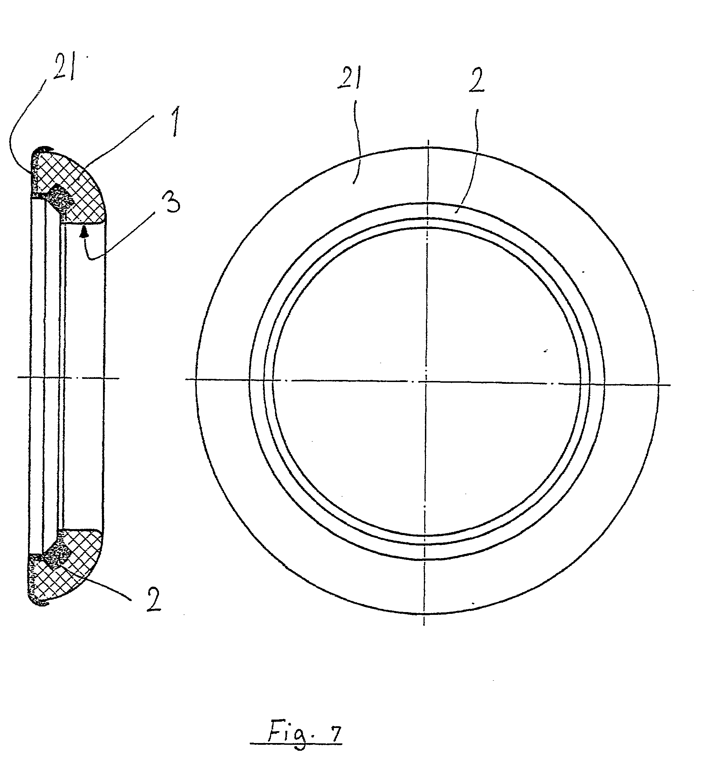

Figur 6 zeigt einen Innenring 2, der in Abwandlung zu der in Figur 5 gezeigten Ausführungsform nur mit einem Formteil 20 die radial wirkende Dichtfläche 3 des Formringes 1 abdeckt. Bei der Ausführungsform gemäß Figur 7 ist der Innenring 2 nur mit einem Formteil 21 versehen, das ausschließlich die axial wirkende Dichtfläche 4 des Formringes 1 abdeckt.

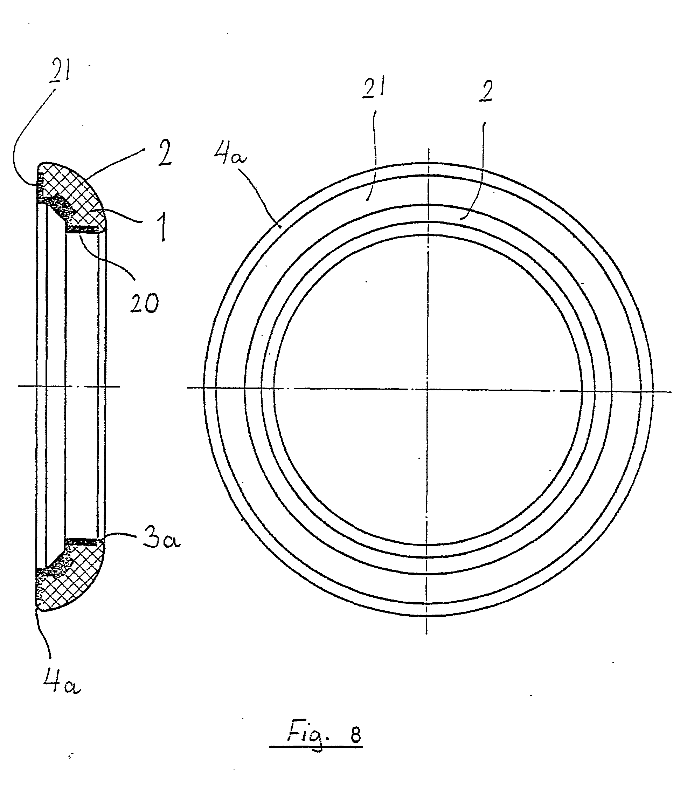

Die in Figur 8 dargestellte Ausführungsform entspricht im Prinzip der der Figur 5. Jedoch decken hier die Formteile 20,21 des Innenringes 2 nicht die gesamten Dichtflächen 3,4 des Formringes 1 ab. Die Formteile 20,21 sind vielmehr bündig in die genannten Dichtflächen 3,4 eingelassen, so daß der Formring 1 mit schmalen Ringbereichen 3a,4a auch als Primär-Dichtung wirkt.

## Patentansprüche

1. Dichtung, bestehend aus einem auf eine zylindrische Mantelfläche (14) aufzuschiebenden und sich auf dieser mit einer radial wirkenden Dichtfläche (3) abstützenden ElastomerFormring (1) mit einem Innenring (2), aus einem ebenfalls auf die genannte Mantelfläche (14) aufzuschiebenden Kammerteil (9) mit einer den Formring (1) umschließenden, dessen Außenkontur gegenüber ein Untermaß aufweisenden Dichtungskammer (10), die sich ausgehend vom lichten Innendurchmesser ($d_K$) des Kammerteils (9) konisch zu einer Stirnseite (11) des Kammerteils (9) erweitert, und aus Befestigungsmitteln (18), die das Kammerteil (9) gegenüber einem zweiten Bauteil (17) festlegen, wobei der Formring (1) eine vorzugsweise rechtwinklig zur radial wirkenden Dichtfläche (3) liegende axial wirkende Dichtfläche (4) aufweist zur Anlage an dem genannten zweiten Bauteil (17), gekennzeichnet durch folgende Merkmale:
   a) Das zweite Bauteil (17) liegt bei angezogenen Befestigungsmitteln (18) an der genannten Stirnseite (11) des Kammerteils (9) an;
   b) der Innenring (2) ist in den Elastomer-Formring (1) eingebettet;
   c) der kleinste lichte Innendurchmesser ($d_I$) des Innenringes (2) ist größer als der Durchmesser ($d_r$) der radial wirkenden Dichtfläche (3);
   d) der Formring (1) bildet zwischen der sichtbaren, seiner gewölbten Mantelfläche (5) gegenüberliegenden inneren Mantelfläche (6) des Innenringes (2) und seinen beiden Dichtflächen (3, 4) eine schmale ringförmige Radial- und Axialfläche (7, 8).

2. Dichtung nach Anspruch 1, dadurch gekennzeichnet, daß die äußere, die beiden Dichtflächen (3, 4) des Formringes (1) miteinander verbindende Mantelfläche (5) angenähert ein Viertelkreissegment bildet.

3. Dichtung nach Anspruch 1 oder 2, dadurch gekennzeichnet, daß der lichte Innendurchmesser ($d_{ax}$) der axial wirkenden kreisringförmigen Dichtfläche (4) größer ist als der Durchmesser ($d_r$) der radial wirkenden Dichtfläche (3).

4. Dichtung nach einem der vorhergehenden Ansprüche, dadurch gekennzeichnet, daß der Konuswinkel ($\alpha$) der Dichtungskammer (10) bezogen auf ihre Symmetrieachse (19) zur Verstärkung der radial wirkenden Abdichtung < 45° und zur Verstärkung der axial wirkenden Abdichtung > 45° ist.

5. Dichtung nach einem der vorhergehenden Ansprüche, dadurch gekennzeichnet, daß das Kammerteil (9) mit der der Dichtungskammer (10) abgewandten Seite eine Buchse (12) aufweist mit radial verlaufenden Ausnehmungen (13) für Befestigungsmittel gegenüber der genannten zylindrischen Mantelfläche (14).

6. Dichtung nach einem der Ansprüche 1 bis 4, dadurch gekennzeichnet, daß das Kammerteil (9) mit seiner die größte Öffnung der Dichtungskammer (10) aufweisenden Stirnseite (11) einen Flansch (15) trägt mit axial verlaufenden Ausnehmungen (16) für Befestigungsmittel (18) gegenüber dem genannten zweiten Bauteil (17).

7. Dichtung nach einem der vorhergehenden Ansprüche, dadurch gekennzeichnet, daß der Innenring (2) mit einem dünnwandigen Formteil (20, 21) die radial wirkende und/oder axial wirkende Dichtfläche (3, 4) des Formringes (1) ganz oder teilweise übergreift.

8. Dichtung nach Anspruch 7, dadurch gekennzeichnet, daß zumindest die genannten Formteile (20, 21) des Innenringes (2) aus unter Einwirkung von Reibungskräften fließenden Materialien bestehen.

9. Dichtung nach Anspruch 7 oder 8, dadurch gekennzeichnet, daß die genannten Formteile (20, 21) des Innenringes (2) eine profilierte Dichtfläche (22) aufweisen.

10. Dichtung nach einem der vorhergehenden Ansprüche, dadurch gekennzeichnet, daß der Innenring (2) lose in eine angepaßte Ringnut des Formringes (1) eingedrückt ist.

11. Dichtung nach Anspruch 10, dadurch gekennzeichnet, daß der Boden der den Innenring (2) aufnehmenden Ringnut nach außen angenähert parallel zur Mantelfläche (5) des Formringes (1) ausgewölbt ist.

**Claims**

1. Seal consisting of an elastomer moulded ring (1) slidable on a cylindrical peripheral surface (14) and bearing thereon with a radially acting sealing face (3), with an inner ring (2), a housing part (9) also slidable on the said peripheral surface (14) with a sealing chamber (10) enclosing the moulded ring (1) and undersized relative to the outer contour thereof, which sealing chamber widens conically from the clear inner diameter $(d_k)$ of the housing part (9) to an end face (11) of the housing part (9), and fixing means (18) which fix the housing part (9) relative to a second component (17), wherein the moulded ring (1) has an axially acting sealing face (4) lying preferably at right angles to the radially acting sealing face (3), for the abutment on the said second component (17), characterized by the following features:
   a) the second component (17) lies against the said end face (11) of the housing part (9) with the fixing means (18) tightened;
   b) the inner ring (2) is embedded in the elastomer moulded ring (1);
   c) the smallest clear inner diameter $(d_r)$ of the inner ring (2) is greater than the diameter $(d_r)$ of the radially acting sealing face (3);
   d) the moulded ring (1) forms a narrow annular radial and axial surface (7, 8) between the visible inner peripheral surface (6) of the inner ring (2) opposite its bowed peripheral surface (5) and its two sealing surfaces (3, 4).

2. Seal according to claim 1, characterized in that the outer peripheral surface (5) connecting together the two sealing faces (3, 4) of the moulded ring (1) forms approximately a quadrant.

3. Seal according to claim 1 or 2, characterized in that the clear inner diameter $(d_{ax})$ of the axially acting annular sealing face (4) is greater than the diameter (dr) of the radially acting sealing face (3).

4. Seal according to one of the preceding claims, characterized in that the cone angle $(\alpha)$ of the sealing chamber (10) relative to its axis of symmetry (19) is <45° for enhancing the radially acting seal and >45° for enhancing the axially acting seal.

5. Seal according to one of the preceding claims, characterized in that the housing part (9) comprises a bush (12) on the side away from the sealing chamber (10), with radially extending recesses (13) for fixing means relative to the said cylindrical peripheral surface (14).

6. Seal according to one of claims 1 to 4, characterized in that the housing part (9) bears a flange (15) at its end face (11) having the largest opening of the sealing chamber (10), with axially extending recesses (16) for fixing means (18) relative to the said second component (17).

7. Seal according to one of the preceding claims, characterized in that the inner ring (2) engages over the radially acting and/or axially acting sealing face (3, 4) of the moulded ring (1), wholly or partially, with a thin-walled moulded part (20, 21).

8. Seal according to claim 7, characterized in that at least the said moulded parts (20, 21) of the inner ring (2) consist of a material which flows under the action of frictional forces.

9. Seal according to claim 7 or 8, characterized in that the said moulded parts (20, 21) of the inner ring (2) have a profiled sealing face (22).

10. Seal according to one of the preceding claims, characterized in that the inner ring (2) is pressed loose into a matching annular groove of the moulded ring (1).

11. Seal according to claim 10, characterized in that the bottom of the annular groove receiving the inner ring (2) is bowed outwardly approximately parallel to the peripheral surface (5) of the moulded ring (1).

**Revendications**

1. Garniture d'étanchéité constituée par une bague profilée en élastomère (1) à enfiler sur une surface latérale cylindrique (14) et s'appuyant sur celle-ci par une surface d'étanchéité (3) agissant radialement, la bague profilée étant munie d'une bague intérieure (2); par une pièce formant chambre (9), également à enfiler sur la surface latérale (14) précitée et présentant une chambre d'étanchéité (10) qui entoure la bague profilée, est sous-dimensionnée par rapport au contour extérieur de cette dernière, et s'élargit coniquement, en partant du diamètre intérieur (dk) de la pièce formant chambre (9), jusqu'à une face frontale (11) de la pièce formant chambre (9); et en outre, par des moyens de fixation (18), qui immobilisent la pièce formant chambre (9) par rapport à une deuxième pièce (17), la bague profilée (1) présentant pour s'appuyer sur la deuxième pièce précitée (17), une surface d'étanchéité (4) agissant axialement qui est de préférence perpendiculaire à la surface d'étanchéité (3) agissant radialement, caractérisée en ce que:
   a) la deuxième pièce (17) s'appuie contre ladite face frontale (11) de la pièce formant chambre (9), lorsque les moyens de fixation (18) sont serrés;
   b) la bague intérieure (2) est emboîtée dans la bague profilée en élastomère;
   c) le plus petit diamètre intérieur $(d_1)$ de la bague intérieure (2) est plus grand que le diamètre $(d_r)$ de la surface d'étanchéité (3) agissant radialement; et
   d) la bague profilée (1) constitue d'étroites surfaces annulaires, radiale et axiale, (7, 8), entre ses deux surfaces d'étanchéité (3, 4) et la surface latérale intérieure (6) visible de la bague intérieure (2), ladite surface visible étant opposée à la surface latérale bombée (5) de la bague profilée.

2. Garniture d'étanchéité selon la revendication 1, caractérisée en ce que la surface extérieure (5) qui relie entre elles les deux surfaces d'étanchéité (3, 4) de la bague profilée (1) forme approximativement un secteur en quart de cercle.

3. Garniture d'étanchéité selon la revendication 1 ou 2, caractérisée en ce que le diamètre intérieur $(d_{ax})$ de la surface d'étanchéité (4) en forme d'anneau circulaire agissant axialement est plus grand que le diamètre $(d_r)$ de la surface d'étanchéité (3) agissant radialement.

4. Garniture d'étanchéité selon l'une des revendications précédentes, caractérisée en ce que l'angle au sommet du cône (α) de la chambre d'étanchéité (10) est, par rapport à son axe (19), <45° pour renforcer l'effet d'étanchéité dans le sens radial et >45° pour renforcer l'effet d'étanchéité dans le sens axial.

5. Garniture d'étanchéité selon l'une des revendications précédentes, caractérisée en ce que la pièce formant chambre (9) présente de son côté opposé à la chambre d'étanchéité (10) un manchon (12) pourvu d'évidements (13) orientés radialement pour recevoir des moyens de fixation par rapport à ladite surface latérale cylindrique (14).

6. Garniture d'étanchéité selon l'une des revendications 1 à 4, caractérisée en ce que la pièce formant chambre (9) porte sur sa face frontale (11) qui présente la plus grande ouverture de la chambre d'étanchéité (10) une bride (15) munie d'évidements (16) orientés axialement pour recevoir des moyens de fixation (18) par rapport à ladite deuxième pièce (17).

7. Garniture d'étanchéité selon l'une des revendications précédentes, caractérisée en ce que la bague intérieure (2) recouvre tout ou partie des surfaces d'étanchéité agissant radialement et respectivement axialement (3, 4) de la bague profilée (1), au moyen d'une partie profilée à paroi mince (20, 21).

8. Garniture d'étanchéité selon la revendication 7, caractérisée en ce que au moins lesdites parties profilées (20, 21) de la bague intérieure (2) sont constituées par des matières qui fluent plastiquement sous l'effet des forces de frottement.

9. Garniture d'étanchéité selon la revendication 7 ou 8, caractérisée en ce que lesdites parties profilées (20, 21) de la bague intérieure (2) présentent une surface d'étanchéité profilée (22).

10. Garniture d'étanchéité selon l'une des revendications précédentes, caractérisée en ce que la bague intérieure (2) est enfoncée sans serrage dans une gorge annulaire adaptée de la bague profilée (1).

11. Garniture d'étanchéité selon la revendication 10, caractérisée en ce que le fond de la gorge annulaire qui reçoit la bague intérieure (2) présente vers l'extérieur un bombement approximativement parallèle à la surface latérale (5) de la bague profilée (1).

Fig. 1

Fig. 2

Fig. 3

Fig. 4

Fig. 5

Fig. 6

Fig. 7

Fig. 8